# EUROPÄISCHE PATENTSCHRIFT

(11) **EP 0 411 597 B1**
(45) Veröffentlichungstag und Bekanntmachung des Hinweises auf die Patenterteilung: **13.03.1996**
(21) Anmeldenummer: 90114732.2
(22) Anmeldetag: 31.07.1990
(51) Int. Cl.: H04L 9/08, H04B 10/12, H04B 10/24

(54) **Telekommunikationssystem zum geschützten Übertragen von Digitalsignalen mit einem passiven optischen Busnetz**
Telecommunication system for protected translation of digital signals by means of a passive optical bus network
Système de télécommunication pour la transmission protégée de signaux numériques utilisant un réseau passif à bus optique

(30) Priorität: 02.08.1989 DE 3925605
(43) Veröffentlichungstag der Anmeldung: 06.02.1991
(73) Patentinhaber: SIEMENS AKTIENGESELLSCHAFT, D-80333 München (DE)
(72) Erfinder: Schaffer, Bernhard, Dipl.-Ing., D-8035 Gauting (DE)

(56) Entgegenhaltungen:
- EP-A- 0 193 190
- WO-A-84/00457
- DE-A- 3 507 064
- PROCEEDINGS OF THE 1987 IEEE/IEICE GLOBAL TELE- COMMUNICATIONS CONFERENCE, 15- 18 November 1987, Seiten 1439-1443, New York, US; N.TOKURA ET AL: "A Broadband Subscriber Network Using Optical Star Couplers"

## Beschreibung

Eine Aufgabe in der Telekommunikationstechnik besteht darin, Digitalsignale vor fremdem Zugriff zu sichern, wobei es diesbezüglich immer schwieriger wird, bei steigendem Kommunikationsaufkommen einerseits effiziente und andererseits wirtschaftlich vertretbare Sicherungssysteme bereitzustellen.
Eine solche Aufgabe stellt sich insbesondere auch in einem Telekommunikationssystem, in dem eine Mehrzahl von Teilnehmerstellen mit ihren Lichtwellenleiter-Teilnehmeranschlußleitungen über eine oder mehrere optische Verzweigereinrichtung(en) an eine mit einer Vermittlungsstelle verbundene Lichtwellenleiter-Anschlußleitung angeschlossen sind, wobei an einer optischen Verzweigereinrichtung eine oder mehrere Teilnehmerstellen angeschlossen sein können.
Derartige Telekommunikationssysteme sind beispielsweise aus der europäischen Patentanmeldung EP-A- 0 171 080 oder aus der deutschen Offenlegungsschrift DE-A-3 507 064 und das EP-A-193 190 bekannt.
In dem in DE-A-3 507 064 beschriebenen Telekommunikationssystem werden die von der Vermittlungsstelle zu den Teilnehmerstellen zu übertragenden Datendigitalsignale zu einem Zeitmultiplexsignal zusammengefaßt, und dieses wird als optisches Signal einer einzigen Wellenlänge in die Nähe der Teilnehmer übertragen und weiter zu den Teilnehmern verteilt. Aus dem Zeitmultiplexsignal entnimmt jeder der Teilnehmer nur das für ihn bestimmte Signal.
Zur Übertragung der teilnehmerindividuellen Signale von den Teilnehmerstellen zur Zentrale werden diese Signale als optische Signale mit teilnehmerindividuellen Wellenlängen über teilnehmerindividuelle Lichtwellenleiter zum gemeinsamen Lichtwellenleiter übertragen, in diesen eingekoppelt und über ihn als Wellenlängenmultiplex-Signal zur Vermittlungsstelle übertragen.
In dem in EP-A-0 171 080 beschriebenen Telekommunikationssystem mit über Lichtwellenleiteranschlußleitungen an eine Vermittlungsstelle angeschlossenen Teilnehmerstellen ist jeweils eine Mehrzahl von Teilnehmerstellen über eine eigene Lichtwellenleiter-Teilnehmeranschlußleitung an einen gemeinsamen optischen Verzweiger angeschlossen, der über eine verzweigerindividuelle Lichtwellenleiter-Anschlußleitung an eine Multiplexanschlußschaltung der Vermittlungsstelle angeschlossen ist. Die Signalübertragung von der Vermittlungsstelle aus geht in einem ISDN-Basisanschluß-Multiplexrahmen vor sich; die Signalübertragung von den Teilnehmerstellen aus geht jeweils in dem der jeweiligen Teilnehmerstelle zugehörigen Zeitkanal in Bursts bestimmter Dauer und Zeitlage vor sich.

In solchen Telekommunikationssystemen, in denen optische Digitalsignale z.B. in einem Zeitmultiplex-Rahmen zu allen an einem Lichtwellenleiter angeschlossenen Teilnehmerstellen übertragen werden, muß sichergestellt sein, daß kein unberechtigter Dritter mißbräuchlich, etwa durch Manipulation an elektronischen Systemkomponenten in den Teilnehmerstellen, Zugang zu den für einen anderen Teilnehmer bestimmten Informationen erhält.

Aufgabe der Erfindung ist es, einen Weg zu zeigen, wie optische Digitalsignale zwischen Vermittlungsstelle und Teilnehmerstellen wirkungsvoll vor Zugriff und Auswertung durch unberechtigte Dritte gesichert werden können.

Die Aufgabe wird bei einem Telekommunikationssystem der eingangs genannten Art erfindungsgemäß dadurch gelöst, daß die optischen Verzweigereinrichtungen mit Richtverzweigern gebildet sind und daß in den Teilnehmerstellen jeweils eine Verwürfelungsschaltung vorgesehen ist, die während des Verbindungsaufbaus zwischen Teilnehmerstelle und Vermittlungsstelle einen Codierschlüssel initiiert und diesen zur Vermittlungsstelle sendet, wonach die von der Vermittlungsstelle zur Teilnehmerstelle zu übertragenden Digitalsignale mit diesem Codierschlüssel verschlüsselt gesendet werden.

Die Erfindung bringt durch die Verwendung von Richtverzweigern, die eine Richtwirkung in dem Sinne haben, daß Licht von einer Teilnehmerstelle zur Vermittlungsstelle hin ohne nennenswerte Dämp-fung, zu anderen Teilnehmerstellen hin jedoch allenfalls stark gedämpft weitergeleitet wird, und die damit einen von einem Teilnehmer ausgesandten Codeschlüssel praktisch nur zur Vermittlungsstelle gelangen lassen, den Vorteil mit sich, daß mit diesem Schlüssel codierte Daten selbst dann, wenn sie von unberechtigten Teilnehmerstellen empfangen werden, von diesen jedenfalls nicht verstanden werden können. Bei richtungsindividuelle Lichtwellenleiter aufweisenden Anschlußleitungen kann es in weiterer Ausgestaltung der Erfindung genügen, daß wenigstens für die von der Teilnehmerstelle zur Vermittlungsstelle führende Übertragungsrichtung Richtverzweiger vorgesehen sind. Die Verwendung von passiven Netzkomponenten bringt den weiteren Vorteil mit sich, daß eine Wartung oder Überwachung sowie eine Stromversorgung von aktiven Netzkomponenten, wie sie z.B. bei Multiplexsystemen notwendig ist, entfallen kann; es ist des weiteren auch möglich, optische Verzweigereinrichtungen zwischen Lichtwellenleiter-Anschlußleitung und Lichtwellenleiter-Teilnehmeranschlußleitung im Erdreich anzuordnen, was die Sicherheitsschwelle gegenüber unberechtigten Dritten zusätzlich erhöht.

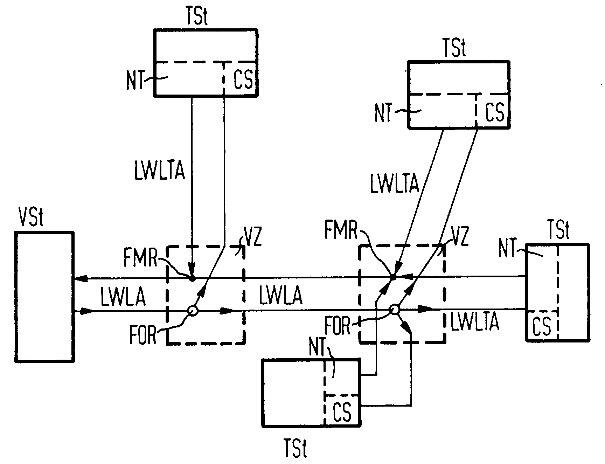

Weitere Besonderheiten der Erfindung werden aus der nachfolgenden näheren Erläuterung eines Ausführungsbeispiels des Telekommunikationssystems gemäß der Erfindung anhand der Zeichnung ersichtlich.

In der Zeichnung ist schematisch in einem zum Verständnis der Erfindung erforderlichen Umfang ein Telekommunikationssystem zum geschützten Übertragen von Digitalsignalen zwischen Teilnehmerstellen und Vermittlungsstelle dargestellt.
In diesem Telekommunikationssystem ist eine Mehrzahl von Teilnehmerstellen mit Lichtwellenleiter-Teilnehmeranschlußleitungen LWLTA über eine oder mehrere optische Verzweigereinrichtung(en) VZ an eine mit einer Vermittlungsstelle VSt verbundene Lichtwellenleiter-Anschlußleitung LWLA angeschlossen. An eine optische Verzweigereinrichtung VZ können dabei eine oder mehrere Teilnehmerstellen TSt angeschlossen sein. Bei Verwendung von richtungsindividuelle Lichtleiter aufweisenden Anschlußleitungen LWLTA, LWLA, wie sie auch in der Zeichnung angedeutet sind, mögen die in den Verzweigereinrichtungen vorgesehenen optischen Richtungsverzweiger VZ zumindest für die Übertragungsrichtung von der Teilnehmerstelle TSt zur Vermittlungsstelle VSt Richtkoppler FMR sein, so daß von einer Teilnehmerstelle TSt kommendes Licht zur Vermittlungsstelle VSt im wesentlichen ungedämpft übertragen wird, während es zu einer anderen Teilnehmerstelle TSt allenfalls mit stark gedämpfter Intensität gelangt; in der Übertragungsrichtung von der Vermittlungsstelle VSt zu den Teilnehmerstellen TSt hin können auch Verzweiger FOR verwendet sein, die eine verteilende Charakteristik bezüglich der zu übertragenden Lichtleistung haben, so daß das Licht jeweils gleichmäßig in alle von einem solchen Verzweiger abgehenden Lichtwellenleiter gelangt.
Bei Realisierung der Anschlußleitungen mit jeweils nur einem, dann in beiden Übertragungsrichtungen ausgenutzten Lichtwellenleiter sind die Verzweigereinrichtungen allein mit Richtkopplern zu realisieren.

Die digitale Datenkommunikation zwischen Teilnehmerstelle TSt und Vermittlungsstelle VSt kann in einem Zeitmultiplexverfahren mit Vielfachzugriff vor sich gehen. Digitalsignale, die - in umgekehrter Übertragungsrichtung - von der Vermittlungsstelle VSt kommen, können in einem zyklischen Zeitmultiplexverfahren, z.B. mit PCM 30, zu den Teilnehmern übertragen werden.

Bei jeder Teilnehmerstelle TSt bzw. ihrem Netzabschluß NT ist, wie in der Zeichnung angedeutet, jeweils eine Verwürfelungsschaltung CS vorgesehen, die bei einem Verbindungsaufbau zwischen Vermittlungsstelle VSt und Teilnehmerstelle TSt einen Codierschlüssel auswürfelt. Dieser Codierschlüssel wird dann über die zugehörige Lichtwellenleiter-Teilnehmeranschlußleitung LWLTA, den (die) nachfolgenden optische(n) Richtkoppler FMR und die Lichtwellenleiter-Anschlußleitung LWLA zur Vermittlungsstelle VSt übertragen. In der Vermittlungsstelle VSt werden die für den Teilnehmer bestimmten Digitalsignale mit dem übertragenen Codierschlüssel codiert. Die codierten optischen Digitalsignale werden dann über die Lichtwellenleiter-Anschlußleitung LWLA, die Verzweiger FOR und die Lichtwellenleiter-Teilnehmeranschlußleitungen LWLTA zu den Teilnehmerstellen übertragen, wobei jedoch nur der Teilnehmer die übertragenen codierten optischen Digitalsignale decodieren kann, der den dafür nötigen teilnehmerspezifischen Codierschlüssel während des Verbindungsaufbaus übertragen hat.

Anstelle des als Ausführungsbeispiel beschriebenen Telekommunikationssystems zum geschützten Übertragen von Digitalsignalen in einem passiven optischen Busnetz mit einem Lichtwellenleiter pro Übertragungsrichtung, wie in der Zeichnung gezeigt, ist auch ein Telekommunikationssystem mit nur einem Lichtwellenleiter für beide Übertragungsrichtungen möglich, wobei dann die Verzweigereinrichtungen allein mit Richtkopplern zu realisieren sind; eine Richtungstrennung im Datentransfer zwischen Vermittlungsstelle und Teilnehmerstelle und umgekehrt kann dann z.B. im WDM-Verfahren oder dem Burst-Verfahren vorgenommen werden.

## Patentansprüche

1. Telekommunikationssystem, in dem eine Mehrzahl von Teilnehmerstellen (TStn) mit Lichtwellenleiter-Teilnehmeranschlußleitungen (LWLTA) über eine oder mehrere optische Verzweigereinrichtung(en) (VZ) an eine mit einer Vermittlungsstelle (VSt) verbundene Lichtwellenleiter-Anschlußleitung (LWLA) angeschlossen sind, wobei an einer optischen Verzweigereinrichtung (VZ), gebildet aus Richtverzweigern, eine oder mehrere Teilnehmerstellen angeschlossen sein können und in den Teilnehmerstellen (TStn) jeweils eine Verwürfelungsschaltung (CS) vorgesehen ist,
**dadurch gekennzeichnet,** daß das System so ausgestaltet ist,
daß während eines Vermittlungsaufbaus zwischen den Teilnehmerstellen (Tstn. TStm) und der Vermittlungsstelle ein teilnehmerindividueller Codierschlüssel in der Teilnehmerstelle (TStn, TStm) initiiert über die gleichen Lichtwellenleiter--Anschlußleitungen (LWLA) zur Vermittlungsstelle (VSt) übertragen wird, wonach jeweils nur die von der Vermittlungsstelle (VSt) zu den Teilnehmerstellen (TStn,TStm) zu übertragenden Digitalsignale mit dem teilnehmerindividuellen Codierschlüssel verschlüsselt gesendet werden.

2. Telekommunikationssystem nach Anspruch 1,
**dadurch gekennzeichnet,**
daß die optischen Verzweigereinrichtungen (VZ) bei richtungsindividuelle Lichtwellenleiter aufweisenden Anschlußleitungen zumindest für die von der Teilnehmerstelle zur Vermittlungsstelle (VSt) führende Übertragungsrichtung Richtverzweiger aufweisen.

3. Telekommunikationssystem nach Anspruch 1 oder 2,
**dadurch gekennzeichnet,**
daß die Übertragung der Digitalsignale von der Vermittlungsstelle (VSt) zur Teilnehmerstelle (TSt) zyklisch im Zeitmultiplex und die Übertragung der Digitalsignale von der Teilnehmerstelle (TSt) zur Vermittlungsstelle (VSt) im Zeitmultiplex mit Vielfachzugriff erfolgt.

## Claims

1. Telecommunication system in which a plurality of subscriber stations (TStn) having fibre-optic subscriber lines (LWLTA) are connected via one or more optical branching device(s) (VZ) to a fibre-optic access line (LWLA) connected to an exchange (VSt), in which one or more subscriber stations may be connected to one optical branching device (VZ), comprising directional branching elements, and a scrambler circuit (CS) is provided in the subscriber stations (TStn) in each case, characterized in that the system is designed in such a way that, during a switching establishment between the subscriber stations (TStn, TStm) and the exchange, a subscriber-specific coding key in the subscriber station (TStn, TStm) is transmitted to the exchange (VSt), initiated by the same fibre-optic access lines (LWLA), whereafter in each case only the digital signals to be transmitted from the exchange (VSt) to the subscriber stations (TStn, TStm) are transmitted encrypted with the subscriber-specific coding key.

2. Telecommunication system according to Claim 1, characterized in that, given direction-specific access lines having optical fibres, the optical branching devices (VZ) have directional branching elements at least for the transmission direction leading from the subscriber station to the exchange (VSt).

3. Telecommunication system according to Claim 1 or 2, characterized in that the digital signals are transmitted from the exchange (VSt) to the subscriber station (TSt) cyclically using time-division multiplexing and the digital signals are transmitted from the subscriber station (TSt) to the exchange (VSt) using time-division multiplexing with multiple access.

## Revendications

1. Système de télécommunication, dans lequel une multiplicité de postes d'abonnés (TStn) sont raccordés, au moyen de lignes (LWLTA) de raccordement d'abonnés à guide d'ondes lumineuses et par l'intermédiaire d'un ou de plusieurs dispositifs optiques de dérivation (VZ), à une ligne (LWLA) de raccordement à guide d'ondes lumineuses reliée à un central (VSt), un ou plusieurs postes d'abonnés pouvant être raccordé à un dispositif de dérivation optique (VZ), formé de dispositifs de dérivation directionnels, et un circuit de brouillage (CS) est prévu dans chacun des postes d'abonnés (TStn),
caractérisé par le fait que le système est formé de telle sorte que, pendant l'établissement d'une communication entre les postes d'abonnés (TStn, TStm) et le central, une clé de codage propre à chaque abonné et présente dans le poste d'abonné (TStn, TStm) est transmise au central (VSt) d'une manière déclenchée par l'intermédiaire des mêmes lignes de raccordement à guides d'ondes lumineuses (LWLA), seuls les signaux numériques, qui doivent être transmis par le central (VSt) aux postes d'abonné (TStn, TStm), étant émises ensuite en étant codées avec la clé de codage propre à l'abonné.

2. Système de communication suivant la revendication 1, caractérisé par le fait que les dispositifs optiques de dérivation (VZ) ont, dans le cas de lignes de raccordement ayant des guides d'ondes lumineuses pour chaque direction, des dispositifs de dérivation directionnels au moins pour la direction de transmission allant du poste d'abonné au central (VSt).

3. Système de communication suivant la revendication 1 ou 2,
caractérisé par le fait que
la transmission des signaux numériques du central (VSt) au poste d'abonné (TSt) s'effectue de façon cyclique en multiplexage temporel et la transmission des signaux numériques du poste d'abonné (TSt) au central (VSt) s'effectue en multiplexage temporel avec accès multiple.
